(19) Europäisches Patentamt
European Patent Office
Office européen des brevets

(11) Veröffentlichungsnummer: **0 324 148 B1**

(12) # EUROPÄISCHE PATENTSCHRIFT

(45) Veröffentlichungstag der Patentschrift:
**23.10.91 Patentblatt 91/43**

(51) Int. Cl.$^5$: **B61F 5/24, B61F 5/30**

(21) Anmeldenummer: **88121458.9**

(22) Anmeldetag: **22.12.88**

(54) **Laufwerk eines Schienenfahrzeuges.**

(30) Priorität: **12.01.88 DE 3800587**

(43) Veröffentlichungstag der Anmeldung:
**19.07.89 Patentblatt 89/29**

(45) Bekanntmachung des Hinweises auf die
Patenterteilung:
**23.10.91 Patentblatt 91/43**

(84) Benannte Vertragsstaaten:
**AT BE DE ES FR GB IT NL SE**

(56) Entgegenhaltungen:
**EP-A- 0 031 008**
**WO-A-86/04864**
**DE-C- 921 374**
**US-A- 3 173 668**
**US-A- 3 782 754**

(73) Patentinhaber: **KRUPP BRÜNINGHAUS GMBH**
**Plettenberger Strasse 12**
**W-5980 Werdohl (DE)**

(72) Erfinder: **Irle, Rudolf**
**Auf der Lied 21**
**W-5970 Plettenberg (DE)**
Erfinder: **Lohmann, Alfred**
**Rinsdorfer Strasse 17**
**W-5900 Siegen 31 (DE)**
Erfinder: **Terlecky, Boris**
**6422 MacArthur Drive**
**Woodridge Illinois 60517 (US)**

(74) Vertreter: **Cohausz & Florack Patentanwälte**
**Postfach 14 01 61 Schumannstrasse 97**
**W-4000 Düsseldorf 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Laufwerk eines Schienenfahrzeuges, das über Blatttragfedern, die jeweils aus mehreren, über einen zentralen Federbund zusammengehaltenen Einzelblättern bestehen, über Schakengehänge am Untergestell des Schienenfahrzeuges aufgehängt ist, und bei dem zusätzlich zu jeder Blatttragfeder eine weitere vorgespannte Blattfeder vorgesehen ist, die eines ihrer Widerlager am Untergestell hat.

Die Erfindung geht dabei von einem durch die europäische Patentschrift EP-A-0009726 bekannten Laufwerk von Schienenfahrzeugen aus, welches im einzelnen Maßnahmen einer Drehhemmung für Einzel- und Doppelachslaufwerke enthält.

Auch die vorliegende Erfindung befaßt sich mit Maßnahmen, die das lauftechnische Verhalten von Schienenfahrzeugen beeinflussen. Um das lauftechnische Verhalten von in Schaken aufgehängten Achsen oder Laufwerken von Schienenfahrzeugen zu verbessern, sind derzeit hydraulische Dämpfer oder sogenannte Drehhemmungsfedern neben anderen komplizierten Schlinger-Dämpfungssystemen bekannt. Diese bekannten Systeme haben die Aufgabe, die insbesondere bei Geradeausfahrt und höheren Geschwindigkeiten entsprechend den jeweiligen Freiheitsgraden auftretenden Schwingungen zu dämpfen.

Dabei haben hydraulische Dämpfungseinrichtungen den Nachteil, daß sie aufwendig und teuer sind und eine für den Einsatz im Gütertransportbereich zu kurze Lebensdauer aufweisen.

Bei Drehhemmungsfedern, wie sie Gegenstand der gattungsbildenden europäischen Patentschrift EP-A-0009726 sind, handelt es sich im Prinzip um eine zwischen dem Untergestell des Schienenfahrzeuges und den Tragfederaugen angeordnete vorgespannte Blattfeder, die sich in einer zum Einfederungszustand des Laufwerkes neutralen Position befindet, so daß die entsprechenden Reibkräfte, die die Dämpfung bewirken sollen, über den gesamten Einfederungsbereich nahezu konstant bleiben und für den teil- oder vollbeladenen Fahrzustand nicht erhöht werden können.

Aufgabe der Erfindung ist es, das Dämpfungsverhalten eines Laufwerks der gattungsgemäßen Art so zu verbessern, daß bei unterschiedlichen Beladungszuständen eine weitgehend gleichbleibend wirksame Dämpfung auch gegen Schlingerbewegungen gegeben ist.

Diese Aufgabe wird dadurch gelöst, daß

a) die weitere Blattfeder als Dämpfungsfeder kinematisch der zugeordneten Blatttragfeder parallel geschaltet ist,

b) die Dämpfungsfeder eine gegenüber der harten Blatttragfeder weiche Feder ist und

c) die Dämpfungsfeder (12) in den Federbund (7), der die Blatttragfeder (3) und die Dämpfungsfeder (12) zusammenhält, eingespannt ist und sich mit ihren freien Enden über Gleitelemente (16) in horizontaler Ebene beweglich in jeder Richtung am Untergestell (2) abstützt.

Auf vorteilhafte Ausgestaltungen der Erfindung gemäß den Unteransprüchen wird verwiesen. Die Erfindung hat den Vorteil, daß sich der Einfederungszustand der Dämpfungsfeder entsprechend der Leerlast des Schienenfahrzeuges auf eine bestimmte Vorspannkraft einstellen läßt, da sich der Leerzustand für die Laufruhe als besonders kritisch herausgestellt hat.

In diesem Zustand können bei höheren Fahrgeschwindigkeiten Schlingerbewegungen, d.h. Drehbewegungen des Laufwerks um die vertikale Laufwerksachse im Frequenzbereich von etwa 3 bis 8 Hz auftreten, die die Laufsicherheit beeinträchtigen und damit im Fahrbetrieb eine Geschwindigkeitsreduzierung erforderlich machen. Hierfür bietet die Erfindung wegen der mitfedernden Dämpfungsfeder den Vorteil, daß durch die konstruktiv mögliche Beeinflussung der Federrate eine definierter Reibkraftanstieg zwischen den Enden der Dämpfungsfeder und dem Untergestell bis zu einer gewünschten Fahrposition erzielt werden kann. Dadurch ist es möglich, auch die bei teil- oder vollbeladenem Schienenfahrzeug eventuell auftretenden Instabilitäten zu unterdrücken.

Durch die erfindungsgemäße kinematische Parallelschaltung der Dämpfungsfeder wird die Blatttragfeder, wenn auch nur begrenzt, entlastet, so daß der für die Dämpfungsfeder zusätzliche Werkstoffeinsatz durch Werkstoffeinsparungen bei der Blatttragfeder weitgehend kompensiert werden kann.

Da bei vertikalen Federungsvorgängen horizontale Längenänderung der Dämpfungsfeder auftreten, werden auch vertikale Federungsvorgänge gedämpft. Die Erfindung unterstützt damit die Funktion der bei Blatttragfedern gelegentlich vorgesehenen Einrichtungen zur Reibungsverstärkung, z.B. gemäß US-PS 4022449.

Der nach der EP-A-0009726 aufgezeigte Weg zur Verringerung der Spurkranzseitenbelastung bei Kurvenfahrten durch eine der Drehhemmung dienende Zusatzfeder geht von einer anderen Aufgabenstellung aus als die Anmeldung und führt zu einer Lösung, bei der die schwere Lasttragfeder über ein Druckstück und eine weitere zusätzliche kurze, einseitig eingespannte Blattfeder am Untergestell über ein Gleitstück anliegt. Abgesehen davon, daß dabei durch zwei unabhängig voneinander mittig eingespannte Federn und die beiden weiteren einseitig eingespannten kurzen Blattfedern eine konstruktiv aus vielen Einzelteilen bestehende Lösung gegeben ist, wird die hier gewünschte Drehhemmung von der schweren Hauptfeder übernommen, so daß eine besondere und gleichbleibende Wirkung auf unterschiedliche Beladungszustände nicht zu erwarten ist.

Beim Gegenstand nach US-A-3173668, der sich auf Fahrzeuge, wie beispielsweise LKW bezieht, können die Achsen nur eine Vertikalbewegung ohne Verschwenken um eine vertikale Achse ausführen. In solch einem Fall treten die in der Beschreibung der Anmeldung erwähnten Schwingungen um eine vertikale Achse nicht auf, so daß die Blattfeder mittels ihrer Widerlager keine Drehhemmung im anmeldungsgemäßen Sinne zu verwirklichen hat. Deshalb weicht die bekannte Lösung schon gemäß Aufgabenstellung von der anmeldungsgemäßen ab.

Schließlich stellt die weiterhin erfindungsgemäß vorgesehene Anordnung der Dämpfungsfeder im Federbund der Blatttragfeder eine elegante Lösung der Befestigung der weiteren Blattfeder ohne zusätzliche Maßnahmen dar. So wird auch nur sehr geringer zusätzlicher vertikaler Bauraum benötigt.

Ein großer Vorteil ist die einfache Gestaltung der Gleitflächen der Gleitelemente am Untergestell des Schienenfahrzeuges, die auch ohne besonderen Aufwand an die bei großen Ausdrehungen des Laufwerks, z.B. in engen Gleisbögen, angepaßt werden können, ohne daß die Gefahr von Verzwängungen besteht.

Nach Anspruch 2 ist vorgesehen, daß auf die Dämpfungsfeder nicht mehr als 25% der von der Blatttragfeder und der Dämpfungsfeder gemeinsam aufnehmbaren maximalen Traglast entfällt.

Patentanspruch 3 enthält den Bereich, in dem sich die Federkonstante der Dämpfungsfeder gegenüber der Federkonstante der Blatttragfeder vorteilhafterweise bewegen soll. Danach soll die Federkonstante der Dämpfungsfeder den 0,01 bis 0,3-fachen Betrag der Federkonstante der Blatttragfeder haben.

Zur Bildung der Gleitflächen zwischen Untergestell und Blattfederenden werden gemäß Anspruch 4 zweckmäßigerweise separate Reibelemente vorgesehen, die auch als auswechselbare Schleißplatten bezeichnet werden können.

Die Maßnahme des Patentanspruches 5, die vorsieht, daß die Reibelemente in Fahrzeuglängsrichtung mit hohem und quer zur Fahrzeuglängsrichtung mit niedrigem Reibwert verschieblich am Untergestell angeordnet sind, hat die vorteilhafte Wirkung, daß in den beiden angegebenen Richtungen unterschiedliche Reibungskräfte auftreten und diese Reibungskräfte praktisch so aufeinander abgestimmt werden können, daß sie optimale Dämpfungsverhältnisse ergeben.

Eine bevorzugte Ausführungsform der Erfindung gemäß Patentanspruch 6 sieht weiterhin vor, daß die Dämpfungsfeder eine Parabelfeder ist.

Gemäß Patentanspruch 7 kann die Dämpfungsfeder zur Gewichtsersparnis aus faserverstärktem Kunststoff bestehen.

Ausführungsbeispiele der Erfindung werden nachfolgend anhand der Zeichnungen vorgestellt.

Es zeigt :

Fig. 1     das Laufwerk eines Schienenfahrzeuges mit einer aus zwei Einzelblättern bestehenden Dämpfungsfeder
Fig. 2     den Schnitt gemäß der Linie A-A durch Fig. 1
Fig. 3     den Federnverbund aus Fig. 1 im ausgebauten Zustand
Fig. 4     einen Federnverbund, der sich aus einer Blatttragfeder und einer Dämpfungsfeder zusammensetzt
Fig. 5     Einzelheiten des Endenbereiches einer Dämpfungsfeder
Fig. 6     den Schnitt nach der Linie B-B durch Fig. 5
Fig. 7     die Draufsicht auf die Anordnung gemäß Fig. 5
Fig. 8     das Kennlinien-Diagramm für eine Federnanordnung gemäß Fig. 4
Fig. 9     das Kennlinien-Diagramm für eine Federnanordnung gemäß Fig. 3
Fig. 10    ein Doppelachslaufwerk
Fig. 11    eine Einzelachsaufhängung
Fig. 12    den Schnitt nach der Linie C-C durch Fig. 11

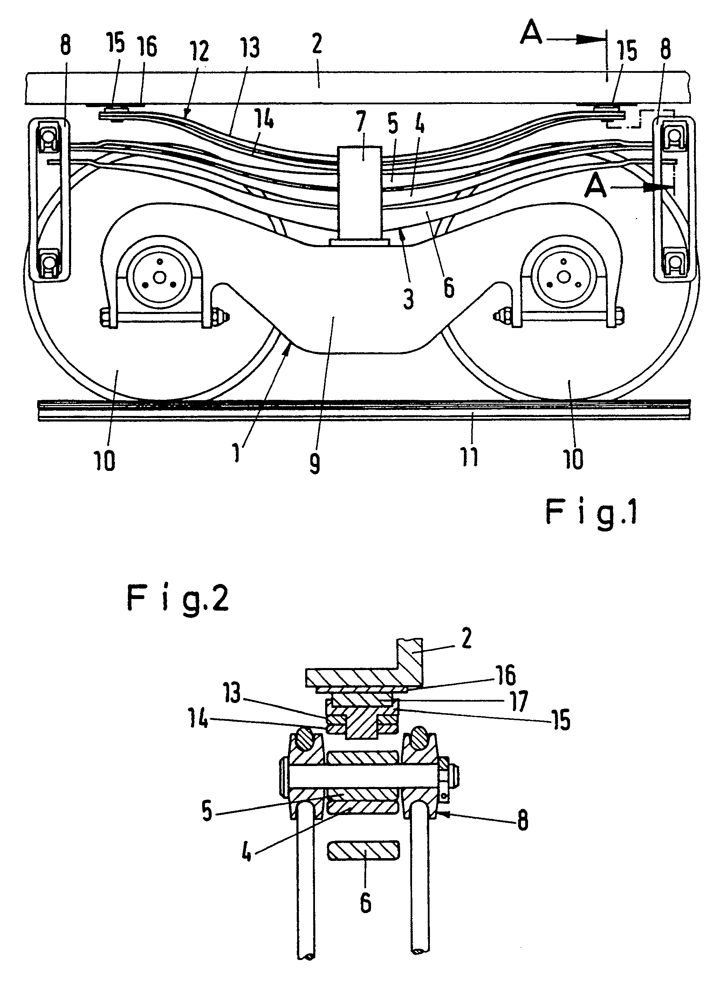

In Fig. 1 ist ein Laufwerk 1, nämlich ein Doppelachslaufwerk eines Schienenfahrzeuges und seine Befestigung am Untergestell 2 des Schienenfahrzeuges dargestellt. Das Laufwerk 1 ist über Blatttragfedern 3, die jeweils aus drei Einzelblättern 4, 5 und 6 bestehen und über einen zentralen Federbund 7 zusammengehalten sind, über Schakengehänge 8 am Untergestell 2 des Schienenfahrzeuges aufgehängt.

Die über die Schakengehänge 8 geführte Traglast wird über den zentralen Federbund 7 in den Laufwerksrahmen 9 geleitet, der über Radsätze 10 auf Schienen 11 ruht.

Über der mehrblättrigen Blatttragfeder 3 ist eine weitere Blattfeder, nämlich eine vorgespannte Dämpfungsfeder 12 angeordnet, die sich aus den Federblättern 13 und 14 zusammensetzt.

Die Dämpfungsfeder 12, d.h. die Federblätter 13 und 14 sind in den zentralen Federbund 7 der Blatttragfeder 3 mit eingespannt.

Zur Erläuterung der Abstützung der Dämpfungsfeder 12 am Untergestell 2 ist eine Zusammenschau der Fig. 1 und Fig. 2 geboten. Insbesondere Fig. 2 zeigt als Schnitt nach der Linie A-A durch Fig. 1, daß sich die Dämpfungsfeder 12 über Endstücke 15 an Gleitflächen am Untergestell 2 abstützt. Die Abstützung erfolgt über auswechselbare Druckstücke 17, die an den Gleitflächen der Gleitelemente 16 anliegen. Durch eine geeignete Werkstoffkombination läßt sich eine gewünschte Reibung zwischen dem Gleitelement 16 und dem Druckstück 17 einstellen und so ein gewünschter Dämpfungseffekt erzielen.

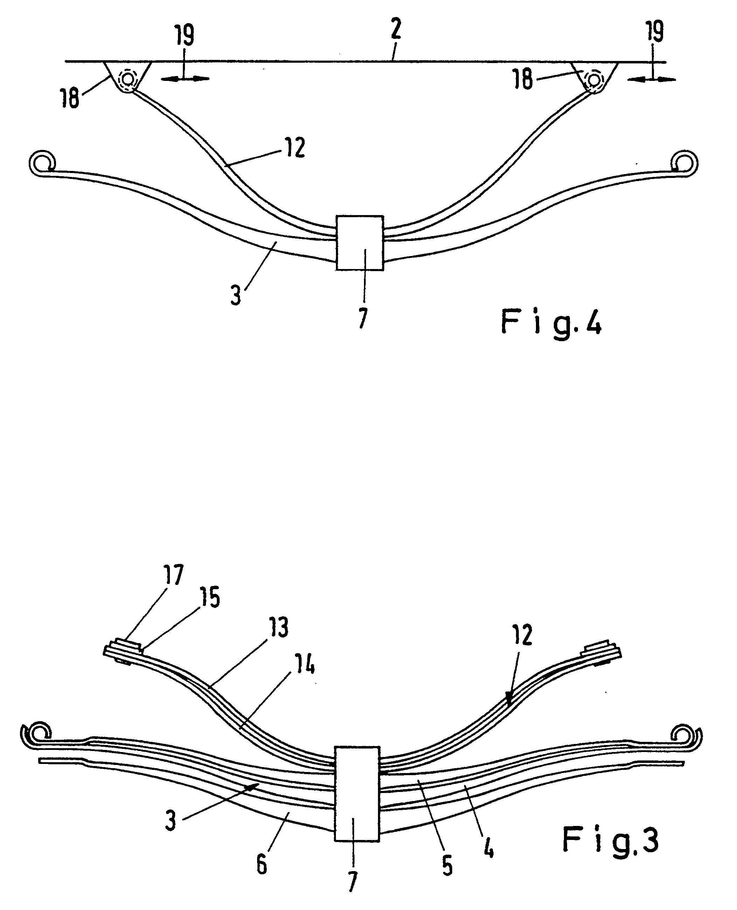

Fig. 3 zeigt den Federnverbund aus Fig. 1 in ausgebautem Zustand, nämlich eine Federnanordnung aus einer progressiven Tragfeder 3 mit einer aus den Einzelblättern 4 und 5 bestehenden Haupttragfeder und einer durch das Einzelblatt 6 gebildeten Zusatzfeder und aus einer weichen Dämpfungsfeder 12 mit den Federblättern 13 und 14. Für ein einachsiges Laufwerk könnte eine Federnanordnung gemäß der schematischen Darstellung nach Fig. 4 in Betracht kommen.

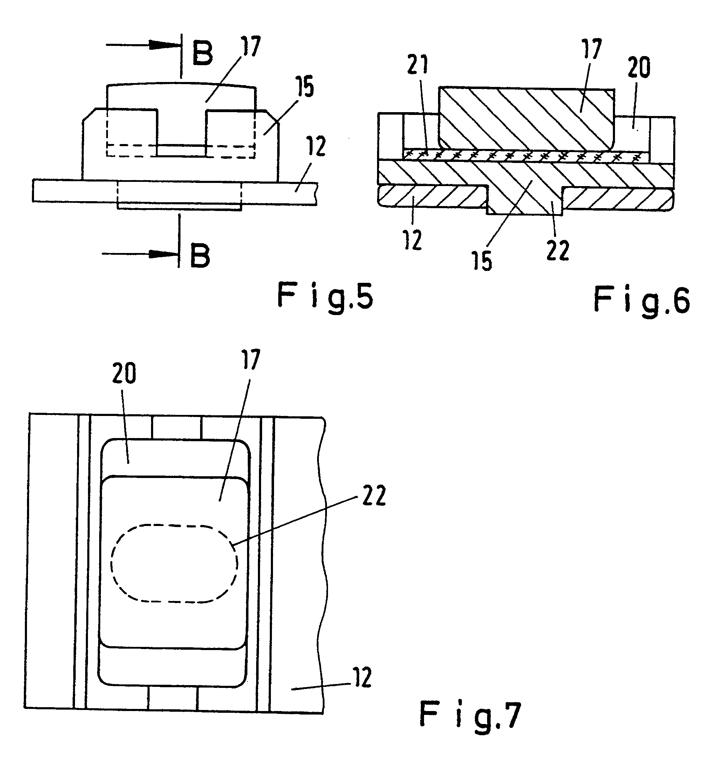

Dort ist eine einblättrige Blatttragfeder 3 mit einer einblättrigen Dämpfungsfeder 12 durch einen gemeinsamen Federbund 7 zusammengehalten. An den Enden der Dämpfungsfeder 12 sind hier Federaugen vorgesehen, die diese über Gleitstücke 18 am Untergestell 2 halten. Doppelpfeile 19 deuten die Längsverschieblichkeit der Gleitstücke 18 an. Die Fig. 5, Fig. 6 und Fig. 7 zeigen in der Zusammenschau eine besondere Ausgestaltung der Abstützung der freien Enden der Dämpfungsfeder 12, nämlich eine Ausführung, bei der die Druckstücke 17 in den Endstücken 15 der Dämpfungsfeder 12 quer zur Fahrzeuglängsrichtung beweglich sind. Zu diesem Zweck hat das Endstück 15 eine kulissenartige Ausnehmung 20, in der sich das Druckstück 17 auf einer Einlage 21 quer zur Fahrzeuglängsrichtung, in der der Schnitt nach Fig. 6 verläuft, bewegen kann. Der Reibungskoeffizient zwischen dem Druckstück 17 und der Einlage 21 soll gering sein.

Die Fig. 5 bis 7 zeigen auch, daß das Endstück 15 einen zentralen Ansatz 22 aufweist, über den das Endstück an der Dämpfungsfeder 12 befestigt ist.

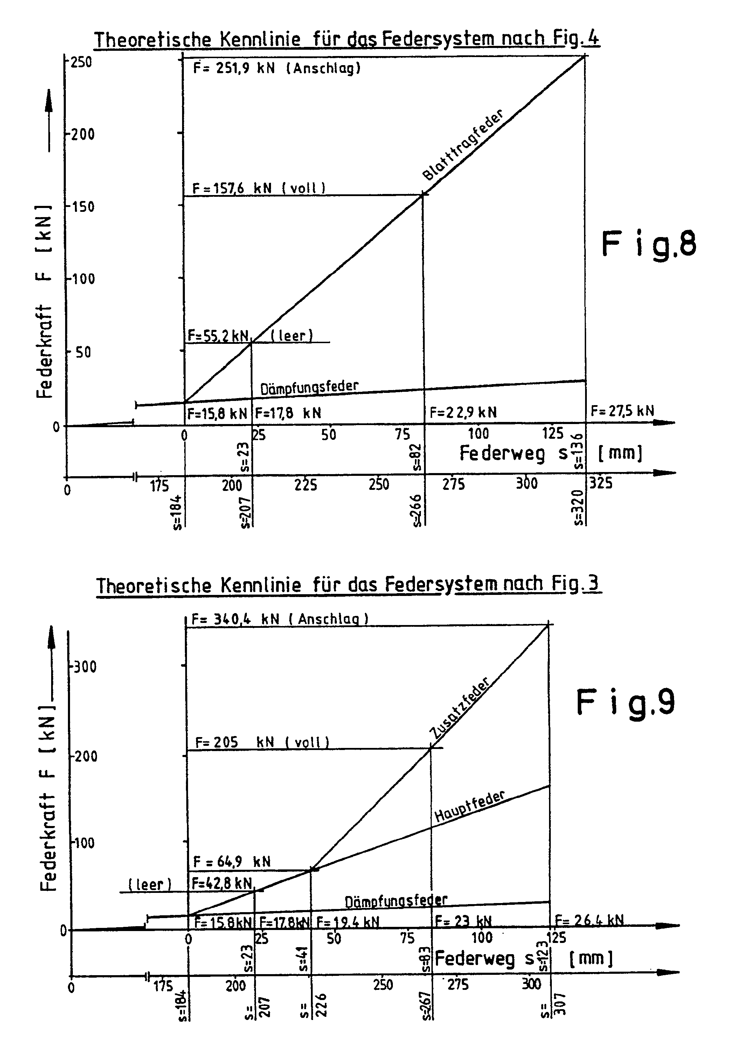

Fig. 8 zeigt in einem Diagramm die theoretische Kennlinie für das Federsystem nach Fig. 4

Dargestellt ist ein Kraft-Federweg-Diagramm. Die Abszisse enthält zwei Skalen, die sich durch ihre Nullpunkte unterscheiden. In der unteren Skala ist der absolute Federweg der Dämpfungsfeder, in der oberen der absolute Federweg der Blatttragfeder dargestellt. Die Ordinate weist die Federkraft des Federsystems aus. Weiter sind die Kennlinien der Dämpfungsfeder 12 mit den Belastungswerten in den verschiedenen Lastpositionen sowie die Kennlinie der linearen Blatttragfeder incl. Dämpfungsfeder 12 dargestellt.

Z.B. erfährt die Blatttragfeder bis zur Leerlastposition mit 55,2 KN Belastung einen Federweg von 22,7 mm, während die Dämpfungsfeder bis zu dieser Position bereits 207 mm zurückgelegt hat.

Abweichend von Fig. 8 zeigt Fig. 9 die Kennlinie einer Dämpfungsfeder mit progressiver Blatttragfeder gemäß Fig. 1 und 3. Die Ansicht nach Fig. 1 entspricht der Leerlastposition nach Fig. 9 mit F = 42,8 KN. Bis zu dieser Position federt die Blatttragfeder 23 mm und die Dämpfungsfeder 207 mm.

Die gewünschte Vorspannkraft der Dämpfungsfeder in der Leerlastposition beträgt in beiden Diagrammen 17,8 KN.

Die Einzelblätter der Blatttragfeder 3 sind in der Regel aus Stahl, die Dämpfungsfeder 12 kann aus Kunststoff oder Stahl sein.

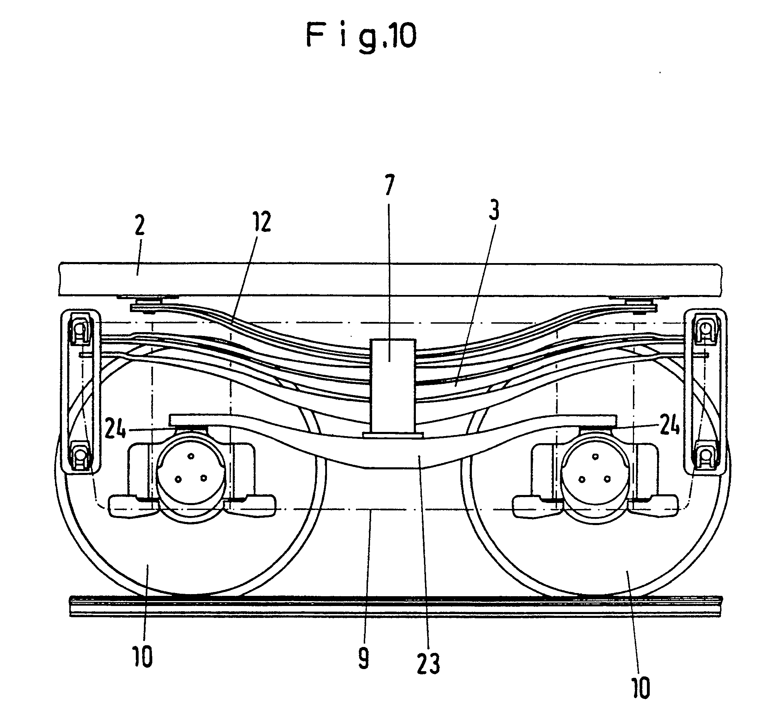

Fig. 10 zeigt ein Doppelachslaufwerk, bei dem die Achsen in einem spannungsfreien Laufwerksrahmen 9, der hier nur schematisch durch eine strichpunktierte Linie angedeutet ist, wie Einzelachsen mit beträchtlichem Spiel gehalten werden. Die Traglast wird hier über den zentralen Federbund 7, einen starren Parabelträger 23 und über Gummielemente 24 zu den beiden Radsätzen 10 geführt.

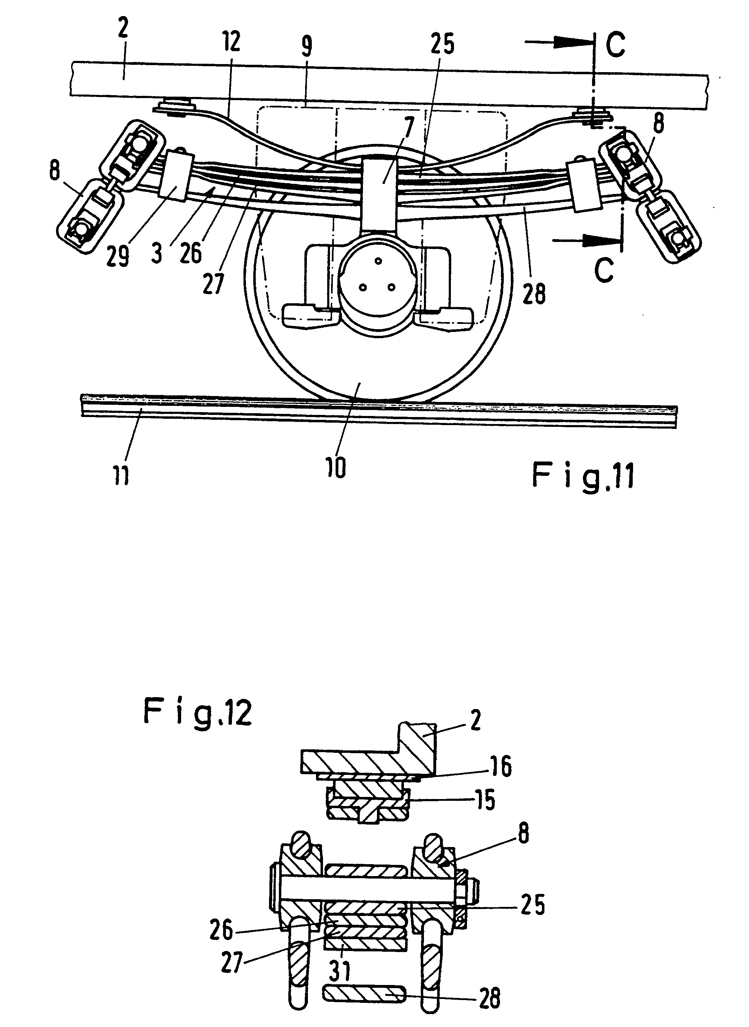

Fig. 11 zeigt ein Einachs-Laufwerk. Bei dieser Ausführung ist eine progressive Blatttragfeder 3 mit den Einzelblättern 25, 26, 27 und 28 vorgesehen, der eine einblättrige Dämpfungsfeder 12 aus Stahl oder, um Gewicht zu sparen, aus faserverstärktem Kunststoff zugeordnet ist. Die oberen Einzelblätter 25, 26 und 27 sind an ihren Enden über Endbunde 29 im Sinne einer Reibungsverstärkung zusammengehalten, während das untere Einzelblatt 28 in den Endbunden 29 noch Spiel hat.

Fig. 12 zeigt als Schnitt nach der Linie C-C durch Fig. 11, daß das oberste Einzelblatt 25 an seinen Enden mit einem Federauge um einen Bolzen 30 des Schakengehänges 8 gelegt ist und daß die Einzelblätter 25, 26 und 27 über ein Blechstück 31 des Endbundes 29 zusammengehalten sind.

## Patentansprüche

1. Laufwerk eines Schienenfahrzeugs, das über Blatttragfedern, die jeweils aus mehreren, über einen zentralen Federbund zusammengehaltenen Einzelblättern bestehen, über Schakengehänge am Untergestell des Schienenfahrzeugs aufgehängt ist, und bei dem zusätzlich zu jeder Blatttragfeder eine weitere vorgespannte Blattfeder vorgesehen ist, die eines ihrer Widerlager am Untergestell hat, **dadurch gekennzeichnet,** daß

a) die weitere Blattfeder als Dämpfungsfeder (12) kinematisch der zugeordneten Blatttragfeder (3) parallelgeschaltet ist,

b) die Dämpfungsfeder (12) eine gegenüber der harten Blatttragfeder (3) weiche Feder ist, und

c) die Dämpfungsfeder (12) in den Federbund (7), der die Blatttragfeder (3) und die Dämpfungsfeder (12) zusammenhält, eingespannt ist und sich mit ihren freien Enden über Gleitelemente (16) in horizontaler Ebene beweglich in jeder Richtung am Untergestell (2) abstützt.

2. Laufwerk nach Anspruch 1, **dadurch gekennzeichnet,** daß auf die Dämpfungsfeder (12) nicht mehr als 25% der von der Blatttragfeder (3) und der Dämpfungsfeder (12) gemeinsam aufnehmbaren maximalen Traglast entfällt.

3. Laufwerk nach einem der Ansprüche 1 oder 2, **dadurch gekennzeichnet,** daß die Federkonstante $R_2$ (kg/mm) der Dämpfungsfeder (12) im Verhältnis zur Federkonstanten $R_1$ (kg/mm) der Blatttragfeder (3) im Bereich der Funktion

$$R_2 \text{ (kg/mm)} = 0,01 \text{ bis } 0,3 \, R_1 \text{ (kg/mm)}$$

liegt.

4. Laufwerk nach einem der Ansprüche 1 bis 3, **dadurch gekennzeichnet,** daß die Gleitelemente (16), an denen die freien Enden der Dämpfungsfeder (12) anliegen als Reibelemente ausgebildet sind.

5. Laufwerk nach Anspruch 4, **dadurch gekennzeichnet,** daß die Reibelemente in Fahrzeuglängsrichtung mit hohem und quer zur Fahrzeuglängsrichtung mit niedrigem Reibwert verschieblich am Untergestell (2) angeordnet sind.

6. Laufwerk nach einem der Ansprüche 1 bis 5, **dadurch gekennzeichnet,** daß die Dämpfungsfeder (12) eine Parabelfeder ist.

7. Laufwerk nach einem der Ansprüche 1 bis 6, **dadurch gekennzeichnet,** daß die Dämpfungsfeder (12) aus faserverstärktem Kunststoff besteht.

## Claims

1. Rail vehicle running gear which is suspended via leaf suspension springs, each consisting of a number of individual leaves held together by a central spring collar, and via chain link hangers from the undercarriage of the rail vehicle, and wherein provided in addition to each suspension leaf spring is a further prestressed leaf spring having one of its abutments on the undercarriage, characterized in that

a) the further leaf spring is connected as a damping spring (12) kinematically in parallel with the associated suspension leaf spring (3),

b) the damping spring (12) is a spring which is soft in comparison with the hard suspension leaf spring (3), and

c) the damping spring (12) is clamped into the spring collar (7) holding the suspension leaf spring (3) and the damping spring (12) together and bears against the undercarriage (2) to move in every direction in the horizontal plane by its free ends via slide elements (16).

2. Running gear according to claim 1, characterized in that not more than 25% of the maximum load jointly absorbable by the suspension leaf spring (3) and the damping spring (12) is borne by the damping spring (12).

3. Running gear according to claims 1 or 2, characterized in that the spring constant $R_2$ (kg/mm) of the damping spring (12) stands in relation to the spring constant $R_1$ (kg/mm) of the suspension leaf spring (3) in the range of the function

$$R_2 \text{ (kg/mm)} = 0.01 \text{ to } 0.3 \, R_1 \text{ (kg/mm)}.$$

4. Running gear according to one of claims 1 to 3, characterized in that the sliding elements (16) against which the free ends of the damping spring (12) bear are constructed in the form of friction elements.

5. Running gear according to claim 4, characterized in that the friction elements are displaceably disposed on the undercarriage (2) with a high frictional value in the longitudinal direction of the vehicle and with a low frictional value transversely of said direction.

6. Running gear according to one of claims 1 to 4, characterized in that the damping spring (12) is a parabolic spring.

7. Running gear according to one of claims 1 to 6, characterized in that the damping spring (12) is made of fibre reinforced plastics.

**Revendications**

1. Train de roulement d'un véhicule ferroviaire, qui est suspendu au châssis inférieur du véhicule ferroviaire par des ressorts porteurs à lames qui sont constitués chacun de plusieurs lames individuelles maintenues ensemble par une attache de ressorts centrale, par l'intermédiaire d'une suspension à anneaux, et dans lequel un autre ressort-lame précontraint est prévu additionnellement pour chaque ressort porteur à lame et à sa butée sur le châssis inférieur, caractérisé en ce que

a) l'autre ressort-lame est monté en tant que ressort d'amortissement (12) cinématiquement en parallèle au ressort porteur à lame (3) adjoint,

b) le ressort d'amortissement (12) est un ressort mou par rapport au ressort porteur à lame (3) dur, et

c) le ressort d'amortissement (12) est encastré dans l'attache de ressort (7) qui maintient ensemble le ressort porteur à lame (3) et le ressort d'amortissement (12) et s'appuie de manière mobile dans un plan horizontal dans chaque direction au châssis inférieur (2) à ses extrémités libres par l'intermédiaire d'éléments de glissement (16).

2. Train de roulement selon la revendication 1, caractérisé en ce que pas plus de 25% de la charge maximale pouvant être supportée au total par le ressort porteur à lame (3) et le ressort d'amortissement (12) ne s'appliquent pas au ressort d'amortissement (12).

3. Train de roulement selon l'une des revendications 1 et 2, caractérisé en ce que la constante de ressort $R_2$ (kg/mm) du ressort d'amortissement (12) par rapport aux constantes de ressort $R_1$ (kg/mm) du ressort porteur à lame (3) se trouve dans la plage de la fonction

$$R_2 \text{ (kg/mm)} = 0,01 \text{ à } 0,3 \, R_1 \text{ (kg/mm)}.$$

4. Train de roulement selon l'une des revendications 1 à 3, caractérisé en ce que les éléments de glissement (16) auxquels les extrémités libres du ressort d'amortissement (12) sont adjacentes sont réalisés sous forme d'éléments de friction.

5. Train de roulement selon la revendication 4, caractérisé en ce que les éléments de friction sont disposés coulissants sur le châssis inférieur (2) avec un coefficient de frottement élevé en direction longitudinale du véhicule et faible transversalement à la direction longitudinale du véhicule.

6. Train de roulement selon l'une des revendications1 à 5, caractérisé en ce que le ressort d'amortissement (12) est un ressort parabolique.

7. Train de roulement selon l'une des revendications 1 à 6, caractérisé en ce que le ressort d'amortissement (12) est constitué par une matière synthétique renforcée par des fibres.

6

Fig.1

Fig.2

Fig.4

Fig.3

Fig.5

Fig.6

Fig.7

## Theoretische Kennlinie für das Federsystem nach Fig. 4

F i g. 8

Federkraft F [kN]

F= 251,9 kN (Anschlag)

F = 157,6 kN (voll)

Blatttragfeder

F=55,2 kN (leer)

Dämpfungsfeder

F=15,8 kN | F=17,8 kN | F=22,9 kN | F=27,5 kN

Federweg s [mm]

s=184 · s=207 · s=23 · s=82 · s=266 · s=136 · s=320

## Theoretische Kennlinie für das Federsystem nach Fig. 3

F i g. 9

Federkraft F [kN]

F= 340,4 kN (Anschlag)

Zusatzfeder

F= 205 kN (voll)

Hauptfeder

F = 64,9 kN

(leer) F=42,8 kN

Dämpfungsfeder

F=15,8 kN | F=17,8kN | F=19,4 kN | F= 23 kN | F= 26,4 kN

Federweg s [mm]

s=184 · s=23 · s=41 · s=83 · s=123 · s=207 · s=226 · s=267 · s=307

# F i g.10

F i g.11

F i g.12